# EUROPEAN PATENT APPLICATION

(11) **EP 4 722 328 A1**
(43) Date of publication of application: **08.04.2026**
(21) Application number: 24855545.0
(22) Date of filing: 23.07.2024
(51) Int. Cl.: C12G 1/022

(54) **GRAPE WINE OR FRUIT WINE FERMENTATION NUTRITIONAL AGENT AND USE THEREOF**

(30) Priority: 24.08.2023 CN 202311080176
(71) Applicant: Angel Yeast Co., Ltd, Yichang, Hubei 443003 (CN)
(72) Inventor: ZHANG, Yan, Yichang, Hubei 443003 (CN); ZHANG, Fangfang, Yichang, Hubei 443003 (CN); LI, Hui, Yichang, Hubei 443003 (CN); CHEN, Hui, Yichang, Hubei 443003 (CN); LIU, Xiuji, Yichang, Hubei 443003 (CN); ZHANG, Ruixia, Yichang, Hubei 443003 (CN)
(74) Representative: karo IP
(86) International application number: PCT/CN2024/106933
(87) International publication number: WO 2025/039819

(57) **Abstract**

A grape wine or fruit wine fermentation nutritional agent and a use thereof. The grape wine or fruit wine fermentation nutritional agent comprises the following components in percentage by weight: 85-99% of a glutathione-containing yeast product, and 1-15% of cellulose and/or a cellulose derivative. By means of the synergistic effect of a yeast product and a cellulose substance, the content of solids in grape juice is ameliorated, and a carrier is provided for uniform distribution of yeast, and the fermentation nutritional agent can also reduce harm of harmful substances generated in the fermentation process, thus improving the fermentation environment, and enhancing the fermentation effect.

## Description

### Related Application

This application claims priority to the prior Application No. 202311080176.8, filed with the China National Intellectual Property Administration on August 24, 2023, the entire content of which is incorporated herein by reference.

### Technical Field

The present invention relates to the technical field of food processing, and specifically to a grape wine or fruit wine fermentation nutritional agent and a use thereof.

### Background Art

The quality of grape wine determines the development of grape wine enterprises, and grape wine brewing determines the quality of grape wine. Various factors in the grape wine brewing process affect the final quality of grape wine. The main microorganism involved in grape wine brewing is yeast, and the health of yeast is a key to the success of fermentation. Yeast requires various nutrients during fermentation, but the nutritional components vary among different grapes. Nitrogen is the main nutrient for yeast and one of the essential nutrients for yeast growth and fermentation, accounting for 12% of the dry weight of yeast cells. Nitrogen is the main element constituting proteins, enzymes, and nucleic acids in yeast cells, and exerts a vital influence on the physiological metabolism of yeast.

In addition to nitrogen nutrients, yeast requires various trace elements, especially some long-chain fatty acids and sterols, which are mainly distributed in grape skins.

When brewing white wine or rosé wine, grape juice is used for fermentation. The solids in grape juice affect the quality of grape wine brewing. High solid content results in poor flavor in grape wine. Therefore, clarification is required before fermentation. After clarification, the solid content in grape juice decreases. The solids in grape juice contain nitrogenous substances and lipids that can be utilized by yeast, especially long-chain fatty acids and sterols. Excessively clarified grape juice causes carbon dioxide generated during grape wine fermentation to fail to overflow in time, thereby causing harm to yeast, thus affecting the speed of alcoholic fermentation, as well as the types and quantities of flavor substances.

The quality of grape wine is also affected by oxygen. Oxygen is a substance required for yeast growth, but it causes oxidation of grape juice or grape wine, especially the browning of grape juice or grape wine. Browning is an oxidation process occurring during grape wine brewing, which affects the aroma, color, and sensory properties of grape wine.

A common method to address the nutrient deficiency in grape juice caused by excessive clarification is to add some insoluble substances derived from the grape clarification process to the grape juice. However, the composition of these substances is uncertain, which easily leads to the formation of other undesirable flavor substances.

The problem of oxidation in grape juice is mainly solved by adding sulfur dioxide, but sulfur dioxide poses certain hazards to human health.

Fruit wine refers to a beverage wine made from fruits other than grapes as the main raw material through processes such as fermentation and partial fermentation. The brewing method of fruit wine is basically the same as that of grape wine, which involves crushing fruits, pressing to extract juice, and adding yeast for fermentation. Therefore, fruit wine also has the same problems as those existing in the above grape wine fermentation process.

### Summary of the Invention

The technical problem to be solved by the present invention is: the problems of yeast fermentation nutrient deficiency, aroma loss, and color browning caused by the reduction of solids and fruit juice oxidation during the fermentation process of grape wine or fruit wine.

To achieve the above objective, the present application provides the following technical solutions:
In a first aspect, the present application provides a grape wine or fruit wine fermentation nutritional agent, comprising the following components in percentage by weight: 85-99% of a glutathione-containing yeast product, and 1-15% of cellulose and/or a cellulose derivative.

In some embodiments of the present application, the content of the glutathione-containing yeast product is 85-95%, and the content of the cellulose and/or a cellulose derivative is 5-15%; preferably, the content of the glutathione-containing yeast product is 85-90%, and the content of the cellulose and/or a cellulose derivative is 10-15%.

In some embodiments of the present application, the grape wine or fruit wine fermentation nutritional agent further comprises optional components, and the optional components comprise, based on the percentage by weight of the fermentation nutritional agent, 0-2% of B vitamins and/or 0-7% of minerals; preferably, the optional components comprise 0.01-2% of B vitamins and 1-7% of minerals.

In some embodiments of the present application, the glutathione-containing yeast product is selected from the group consisting of one or two or more of glutathione-containing inactive yeast, glutathione-containing autolyzed yeast, and glutathione-containing yeast extract, preferably glutathione-containing inactive yeast; preferably, the content of glutathione in the glutathione-containing yeast product is 2-15 wt%.

In some embodiments of the present application, the cellulose and/or a cellulose derivative comprises one or two or more of microcrystalline cellulose, sodium carboxymethyl cellulose, and hydroxypropyl methyl cellulose, preferably microcrystalline cellulose.

In some embodiments of the present application, the B vitamins comprise one or two or more of vitamin B1, vitamin B2, vitamin B3, vitamin B5, vitamin B6, inositol, and biotin;
preferably, the B vitamins comprise, based on the percentage by weight of the fermentation nutritional agent, 0-0.12 wt% of vitamin B1, 0-0.4 wt% of vitamin B2, 0-0.4 wt% of vitamin B3, 0-0.4 wt% of vitamin B5, 0-0.4 wt% of vitamin B6, 0-0.5 wt% of inositol, and 0-0.5 wt% of biotin; preferably, the B vitamins comprise 0.1-0.12 wt% of vitamin B1, 0.16-0.4 wt% of vitamin B2, 0.36-0.4 wt% of vitamin B3, 0.24-0.4 wt% of vitamin B5, 0.12-0.4 wt% of vitamin B6, and 0-0.3 wt% of biotin.

In some embodiments of the present application, the minerals are selected from the group consisting of one or two or more of salts containing magnesium, manganese, and zinc;
preferably, the minerals are selected from the group consisting of one or two or more of magnesium sulfate, manganese sulfate, and zinc sulfate.

In a second aspect, the present invention provides the use of the fermentation nutritional agent as described above in the preparation process of grape wine or fruit wine; preferably, the dosage of the fermentation nutritional agent in grape wine or fruit wine fermentation is, based on the volume of grape juice or fruit juice, 0.2-0.5 g/L.

In some embodiments of the present application, the use of the fermentation nutritional agent is for improving the fermentation performance and/or aroma and/or color of grape wine or fruit wine; preferably, the use of the fermentation nutritional agent is for improving the aroma and color of grape wine.

In a third aspect, the present application further provides a method for protecting the aroma and/or color of grape wine or fruit wine using the fermentation nutritional agent as described above, comprising, in the preparation process of the grape wine or fruit wine, pre-introducing the fermentation nutritional agent as described above into grape juice or fruit juice before the start of the alcoholic fermentation step, in the early stage of fermentation, during fermentation, or after fermentation.

In a fourth aspect, the present application further provides a grape wine or fruit wine prepared using the fermentation nutritional agent as described above.

In a fifth aspect, the present application further provides the use of a glutathione-containing yeast product combined with cellulose and/or a cellulose derivative for improving the fermentation performance and/or aroma and/or color of grape wine or fruit wine.

The beneficial effects of the present invention are as follows:
(1) Yeast products and cellulose substances exhibit adsorption effects, which can adsorb harmful substances such as medium-chain fatty acids generated in the yeast fermentation process, while providing crystal nuclei for the release of carbon dioxide to accelerate the release of carbon dioxide. The more carbon dioxide dissolves during fermentation, the more acidic the environment becomes, and the greater the harm to yeast. Therefore, the fermentation nutritional agent of the present invention can reduce harm of harmful substances generated in the fermentation process.
(2) By means of the synergistic effect of a yeast product and a cellulose substance in the fermentation nutritional agent of the present application, the content of solids in grape juice is ameliorated, and a carrier is provided for uniform distribution of yeast, and the fermentation nutritional agent of the present application can also accelerate the release of carbon dioxide, reduce harm of harmful substances generated in the fermentation process, thus improving the fermentation environment, and enhancing the fermentation effect.
(3) Adding the fermentation nutritional agent of the present application in the later stage of fermentation can increase the content of glutathione in grape wine, protect the aroma and color of grape wine, and extend the shelf life of grape wine.

### Detailed Description of the Invention

To make the objective, technical solutions, and technical effects of the embodiments of the present invention clearer, the technical solutions in the embodiments of the present invention are described clearly and completely. The embodiments described below are merely some rather than all of the embodiments of the present invention. All other embodiments obtained by those of ordinary skill in the art, in combination with the embodiments of the present invention, without inventive efforts, shall fall within the protection scope of the present invention.

Clarified grape juice is used for the fermentation of white wine and rosé wine. However, excessively clarified grape juice is deficient in nutrients, especially lipids. Lipids in grapes are mainly present in grape skins, including long-chain unsaturated fatty acids and sterols. Unsaturated fatty acids and sterols are important components of yeast cell membranes, maintaining membrane fluidity and the activity of transporter proteins on the membrane. Yeast requires oxygen to synthesize unsaturated fatty acids and sterols by itself; however, yeast lacks oxygen in the fermentation process of grape wine. Therefore, lipid deficiency easily occurs during the fermentation of white wine and rosé wine, leading to incomplete fermentation.

In a first aspect, in a specific embodiment of the present application, the present application provides a grape wine or fruit wine fermentation nutritional agent, comprising 85-99% of a glutathione-containing yeast product, and 1-15% of cellulose and/or a cellulose derivative, with the sum of the percentages by weight of each component being 100%.

In the present application, the glutathione-containing yeast product includes, but is not limited to, one or two or more of glutathione-containing inactive yeast, glutathione-containing autolyzed yeast, and glutathione-containing yeast extract, preferably glutathione-containing inactive yeast; preferably, the content of glutathione in the glutathione-containing yeast product is 2-15 wt%.

It should be noted that the fruit wine described in the present application refers to an alcoholic beverage brewed by fermentation using fruits other than grapes as raw materials, wherein the raw materials of the fruit wine include, but are not limited to, one or two or more of apples, pears, cherries, plums, and kiwi fruits.

Yeast products are rich in nitrogen nutrients, long-chain fatty acids, sterols, and other substances. Glutathione in glutathione-containing yeast products has an antioxidant effect, which can prevent the oxidation of polyphenols in grape juice, prevent the browning of grape wine, and enhance the aroma of grape wine.

Glutathione is a small-molecule polypeptide present in plants and microorganisms and plays an important antioxidant role in grape wine. It has the ability to scavenge o-quinones in grape juice or grape wine. O-quinones are produced by the oxidation of phenolic substances in grape juice and are the main cause of color browning and aroma loss. Glutathione is a more effective antioxidant than ascorbic acid. The -SH group in glutathione reacts with o-quinones to generate 2-(S)-glutathionylcaffeic acid, also known as grape reaction product (GRP). This product can inhibit further oxidation mediated by grape polyphenol oxidase. In this way, GSH traps o-quinones to form a colorless compound, preventing the formation of brown polymers. Therefore, GSH can prevent the browning of grape must.

In addition to preventing the browning of grape juice, in certain special grape varieties, such as Sauvignon Blanc, that contain mercaptans (3-mercaptohexanol (3MH), 3-mercaptohexyl acetate (3MH-A), and 4-methylmercapto pentanone (4MMP)), which are the typical aromas of certain grape varieties and can also combine with o-quinones formed during the oxidation of phenolic substances, thus resulting in the loss of the typical aromas of the varieties, GSH can compete with mercaptans in grapes for o-quinones, thereby protecting the typical aromas in these grapes.

Adding the yeast product to fermenting grape juice can not only provide nutrients for yeast growth, but also increase the content of solids in grape juice and improve the release of carbon dioxide.

In the present application, the cellulose and/or a cellulose derivative includes, but is not limited to, one or two or more of microcrystalline cellulose, sodium carboxymethyl cellulose, and hydroxypropyl methyl cellulose, preferably microcrystalline cellulose; preferably, the cellulose and/or a cellulose derivative of the present application is food-grade, such as food-grade cellulose obtained by purification and mechanical crushing using α-cellulose pulp from fibrous plants as raw material, or food-grade microcrystalline cellulose obtained by treating cellulose to undergo partial depolymerization, then removing the amorphous part and purifying, or sodium carboxymethyl cellulose or other cellulose derivative products prepared by modification, all of which cannot be utilized by microorganisms, have stable properties, and adding cellulose in the fermentation process of grape wine can increase the content of solids in grape juice; although cellulose and/or a cellulose derivative cannot provide nutrients required for yeast growth, the porous surface of cellulose and/or a cellulose derivative interacts with insoluble substances in yeast products to accelerate the release of carbon dioxide generated in the fermentation process, prevent the accumulation of carbon dioxide in grape wine fermentation broth from affecting the activity of yeast, thereby improving the fermentation environment.

In some embodiments of the present application, the content of the glutathione-containing yeast product in the fermentation nutritional agent as described above is 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 98 wt%, or 99 wt%, or within the numerical range formed by any two of the aforementioned specific values as endpoints. In some embodiments, the content of the glutathione-containing yeast product in the above fermentation nutritional agent as described above may be 85-95 wt% or 85-90 wt%. It should be understood that, in specific embodiments, any of the aforementioned ranges may be combined with any ranges of other components, provided that a fermentation nutritional agent with the desired performance of the present invention can be obtained.

In some embodiments of the present application, the content of the cellulose and/or a cellulose derivative in the fermentation nutritional agent as described above is 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, or 15 wt%, or within the numerical range formed by any two of the aforementioned specific values as endpoints. In some embodiments, the content of the cellulose and/or a cellulose derivative in the fermentation nutritional agent as described above may be 5-15 wt% or 10-15 wt%. It should be understood that, in specific embodiments, any of the aforementioned ranges may be combined with any ranges of other components, provided that a fermentation nutritional agent with the desired performance of the present invention can be obtained.

In the present application, the optional components comprise, based on the percentage by weight of the fermentation nutritional agent, 0-2 wt% of B vitamins and/or 0-7 wt% of minerals, wherein the B vitamins include, but are not limited to, one or two or more of vitamin B1, vitamin B2, vitamin B3, vitamin B5, vitamin B6, inositol, and biotin. B vitamins are micronutrients required for yeast growth and enhance the activity and vitality of yeast. Preferably, the B vitamins comprise, based on the percentage by weight of the fermentation nutritional agent, 0-0.12 wt% of vitamin B1, 0-0.4 wt% of vitamin B2, 0-0.4 wt% of vitamin B3, 0-0.4 wt% of vitamin B5, 0-0.4 wt% of vitamin B6, 0-0.5 wt% of inositol, and 0-0.5 wt% of biotin; preferably, the B vitamins comprise 0.1-0.12 wt% of vitamin B1, 0.16-0.4 wt% of vitamin B2, 0.36-0.4 wt% of vitamin B3, 0.24-0.4 wt% of vitamin B5, 0.12-0.4 wt% of vitamin B6, and 0-0.3 wt% of biotin.

In the present application, the minerals include, but are not limited to, one or two or more of magnesium sulfate, manganese sulfate, and zinc sulfate, preferably magnesium sulfate. During yeast growth, minerals, as functional substances, provide bioactive centers for yeast. For example, the concentration of magnesium ions may directly affect the growth rate of yeast and the rate of sugar degradation, and magnesium ions play an important role in protecting cells from stress factors, thereby enhancing yeast tolerance to alcohol.

In some embodiments of the present application, the optional components include, based on the percentage by weight of the fermentation nutritional agent, 0.01-2% of B vitamins and 1-7% of minerals; preferably, the optional components include 1-2% of B vitamins and 1-7% of minerals.

The grape wine or fruit wine fermentation nutritional agent of the present invention can improve the fermentation environment of excessively clarified grape juice. Inactive yeast and autolyzed yeast are yeast products that are not completely dissolved, which can increase the turbidity in grape juice, provide nutrients for yeast, and increase the speed of alcoholic fermentation.

In a second aspect, the present application provides the use of the grape wine or fruit wine fermentation nutritional agent as described above in the preparation process of grape wine or fruit wine; preferably, the dosage of the fermentation nutritional agent in the preparation process of grape wine or fruit wine is, based on the volume of grape juice or fruit juice, 0.2-0.5 g/L.

In the preparation process of grape wine or fruit wine, the addition position of the fermentation nutritional agent as described above is not particularly limited, and it can be added before the start of the alcoholic fermentation step, in the early stage of fermentation, during fermentation, or after fermentation.

In an embodiment of the present application, the use of the fermentation nutritional agent as described above is for improving the fermentation performance and/or aroma and/or color of grape wine or fruit wine; preferably, the use of the fermentation nutritional agent is for improving the aroma and color of grape wine.

In a third aspect, the present application further provides a method for protecting the aroma and/or color of grape wine or fruit wine using the fermentation nutritional agent as described above, comprising, in the preparation process of the grape wine or fruit wine, introducing the fermentation nutritional agent as described above into grape juice or fruit juice before the start of the alcoholic fermentation step, in the early stage of fermentation, during fermentation, or after fermentation.

In a fourth aspect, the present application further provides a grape wine or fruit wine prepared using the fermentation nutritional agent as described above.

In a fifth aspect, the present application further provides the use of glutathione combined with cellulose for improving the aroma and/or color of fruit wine.

To facilitate the understanding of the technical solutions of the present application, the technical solutions of the present application are further described below in conjunction with specific experimental examples.

Raw materials and sources used in Examples and Comparative Examples of the present invention are shown in Table 1.

**Table 1: Raw materials used in Examples and Comparative Examples of the present invention**

| | Manufacturer | Purity/Model |
|---|---|---|
| Glutathione-contain ing inactive yeast | Angel Yeast Co., Ltd. | Glutathione content 4.5%, Model: FN401-GH |
| Glutathione-contain ing yeast extract | Angel Yeast Co., Ltd. | Glutathione content 10.4%, Model: FN502GH |
| Microcrystalline cellulose | Xinwang Chemical Co., Ltd. | > 97% |
| Vitamin B1 | Xinfa Pharmaceutical Co., Ltd. | > 98.5% |
| Vitamin B2 | Jiahe Biotechnology Co., Ltd. | > 98% |
| Vitamin B3 | Shandong Kunda Biotechnology Co., Ltd. | > 99% |
| Vitamin B5 | Xinfa Pharmaceutical Co., Ltd. | > 99% |
| Vitamin B6 | Xinfa Pharmaceutical Co., Ltd. | > 99% |
| Inositol | Hebei Yuwei Biotechnology Co., Ltd. | > 99% |
| Biotin | Zhejiang NHU Pharmaceutical Co., Ltd. | > 98% |

### Example 1

90 g of glutathione-containing inactive yeast FN401-GH and 10 g of microcrystalline cellulose were weighed and mixed uniformly to obtain Fermentation Nutritional Agent 1.

### Example 2

85 g of glutathione-containing inactive yeast FN401-GH and 15 g of microcrystalline cellulose were weighed and mixed uniformly to obtain Fermentation Nutritional Agent 2.

### Example 3

95g of glutathione-containing inactive yeast FN401-GH and 5 g of microcrystalline cellulose were weighed and mixed uniformly to obtain Fermentation Nutritional Agent 3.

### Example 4

42.5 g of glutathione-containing inactive yeast FN401-GH, 42.5 g of glutathione-containing yeast extract FN502-GH, 9 g of microcrystalline cellulose, 0.12 g of vitamin B1, 0.36 g of vitamin B3, 0.24 g of vitamin B5, 0.16 g of vitamin B2, 0.12 g of vitamin B6, and 5 g of magnesium sulfate were weighed and mixed uniformly to obtain Fermentation Nutritional Agent 4.

### Example 5

45 g of glutathione-containing inactive yeast FN401-GH, 45 g of glutathione-containing yeast extract FN502-GH, and 10 g of microcrystalline cellulose were weighed and mixed uniformly to obtain Fermentation Nutritional Agent 5.

### Example 6

45 g of glutathione-containing inactive yeast FN401-GH, 45 g of glutathione-containing yeast extract FN502-GH, 9 g of microcrystalline cellulose, 0.12 g of vitamin B1, 0.36 g of vitamin B3, 0.24 g of vitamin B5, 0.16 g of vitamin B2, and 0.12 g of vitamin B6 were weighed and mixed uniformly to obtain Fermentation Nutritional Agent 6.

### Example 7

30 g of glutathione-containing inactive yeast FN401-GH, 55 g of glutathione-containing yeast extract FN502-GH, 7.9 g of microcrystalline cellulose, 0.1 g of biotin, and 7 g of magnesium sulfate were weighed and mixed uniformly to obtain Fermentation Nutritional Agent 7.

### Example 8

60 g of glutathione-containing inactive yeast FN401-GH, 30 g of glutathione-containing yeast extract FN502-GH, 7 g of sodium carboxymethyl cellulose, 0.1 g of vitamin B1, 0.3 g of vitamin B2, 0.4g of vitamin B3, 0.4 g of vitamin B5, 0.4 g of vitamin B6, 0.3 g of biotin, and 1 g of zinc sulfate were weighed and mixed uniformly to obtain Fermentation Nutritional Agent 8.

### Experimental Example 1

Fermentation tests were carried out to simulate white wine using Triple M simulated juice. The formulation of the Triple M medium was as follows:
Ergo stock: 12.5 mL of Tween 80, 37.5 mL of 95% ethanol, 0.125 g of ergosterol,
Solution A: Add 120 g of glucose, 120 g of fructose, and 4 mL of Ergo stock to 375 mL of deionized water, and after dissolution, make up the volume to 500 mL with deionized water;
Solution B: Add 6 g of L(+)-tartaric acid, 3 g of L(-)-malic acid, and 0.5 g of citric acid to 250 mL of deionized water;
Solution C: Add 1.7 g of YNB, 6 mg of inositol, 0.2 g of anhydrous calcium chloride, 12.2 mg of tyrosine, 118.8 mg of tryptophan, 21.67 mg of isoleucine, 29.47 mg of aspartic acid, 79.8 mg of glutamic acid, 248 mg of arginine, 32.1 mg of leucine, 50.3 mg of threonine, 12.1 mg of glycine, 334.7 mg of glutamine, 96.2 mg of alanine, 29.5 mg of valine, 20.8 mg of methionine, 25.1 mg of phenylalanine, 52 mg of serine, 21.7 mg of histidine, 11.3 mg of lysine, 8.7 mg of cysteine, 405.8 mg of proline, and 400 mg of diammonium hydrogen phosphate to 250 mL of deionized water.

After mixing A, B, and C, the pH was adjusted to 3.5 with 4 mol/L potassium hydroxide, and 0.22 µm membrane filtration sterilization was carried out to obtain Triple M simulated juice, which was prepared and used immediately.

Angel wine yeast CECA (Angel Yeast Co., Ltd.) was inoculated into an Erlenmeyer flask containing 500 mL of Triple M simulated juice at an inoculum size of 0.2 g/L. Immediately after yeast inoculation, nutrients were added, with a group without nutrient addition as a control. Incubation was carried out in an incubator at 25°C, and the fermentation process was monitored by the CO₂ weight loss method (weighing was carried out every 24 h). Fermentation was considered complete when the weight loss of each flask was approximately 0.5 g. The sugar content of the fermentation system was 240 g/L, and the mass content of yeast-assimilable nitrogen in the Triple M simulated juice was 220 ppm.
Treatment 1: The added nutrient was Fermentation Nutritional Agent 1 at a dosage of 0.3 g/L;
Treatment 2: The added nutrient was glutathione-containing inactive yeast FN401GH at a dosage of 0.3 g/L;
Treatment 3: The added nutrient was microcrystalline cellulose at a dosage of 0.3 g/L;
Treatment 4: The added nutrient was glutathione-containing inactive yeast FN401GH at a dosage of 0.255 g/L;
Treatment 5: The added nutrient was microcrystalline cellulose at a dosage of 0.045 g/L;
Treatment 6: No nutrients were added after yeast inoculation.

The results are shown in Table 2:

**Table 2: Results of cumulative carbon dioxide weight loss (g/L)**

| Time, d | Treatment 1 | Treatment 2 | Treatment 3 | Treatment 4 | Treatment 5 | Treatment 6 |
|---|---|---|---|---|---|---|
| 0 | 0 | 0 | 0 | 0 | 0 | 0 |
| 1 | 7.78 | 4.94 | 2.52 | 4.86 | 1.01 | 0.86 |
| 2 | 31.81 | 23.16 | 18.98 | 23.17 | 12.03 | 11.52 |
| 3 | 51.08 | 39.18 | 34.09 | 38.50 | 24.89 | 23.48 |
| 4 | 66.72 | 52.57 | 47.17 | 52.37 | 35.94 | 34.15 |
| 5 | 78.93 | 64.61 | 59.08 | 64.41 | 46.53 | 44.59 |
| 6 | 86.96 | 72.74 | 68.06 | 72.68 | 55 | 52.95 |
| 7 | 93.74 | 80.03 | 75.7 | 79.39 | 63.02 | 60.51 |
| 9 | 102.34 | 89.68 | 85.72 | 89.69 | 75.16 | 71.39 |
| 11 | 107.98 | 97.04 | 94.22 | 96.29 | 84.54 | 80.14 |
| 13 | 111.83 | 101.88 | 100.1 | 101.48 | 92.1 | 87.23 |
| 14 | 113.25 | 103.81 | 102.81 | 103.71 | 95.37 | 90.3 |
| 15 | 114.15 | 104.89 | 104.27 | 104.25 | 97.24 | 92.02 |
| 16 | 114.54 | 105.64 | 105.05 | 105.34 | 98.37 | 92.84 |

Triple M simulated juice is a clarified juice, similar to the clarified grape juice used in the fermentation of white wine or rosé wine. Triple M-simulated fermentation of clarified white wine generally involves grape juice with a turbidity of > 80 NTU, while a turbidity of < 50 NTU will affect the fermentation of grape wine. In Experimental Example 1, the extreme environment of clarified juice fermentation for white wine/or rosé wine was simulated. Inactive yeast refers to heat-inactivated yeast containing insoluble yeast cells, which can increase the turbidity of grape juice. Microcrystalline cellulose is also a type of insoluble macromolecular substance and has a suspending aid effect. Insoluble substances can help viable yeast suspend during fermentation; meanwhile, insoluble particles in grape juice facilitate the release of carbon dioxide generated by yeast. Carbon dioxide is a soluble gas that forms carbonic acid when dissolved in water. As an acidic substance, carbonic acid causes a decrease in pH, and this pH decrease affects yeast fermentation.

As can be seen from Table 2, the results of Treatment 2 and Treatment 3 indicate that both inactive yeast and microcrystalline cellulose have the effects of improving the fermentation environment and promoting fermentation. The results of Treatment 1 compared with Treatment 2 and Treatment 3 indicate that the combined use of microcrystalline cellulose and yeast exhibits a better effect on improving yeast fermentation than the individual use of inactive yeast and microcrystalline cellulose.

In addition, for Treatment 4, only glutathione-containing inactive yeast FN401GH was added at a dosage of 0.255 g/L, and compared with Treatment 6, the cumulative carbon dioxide weight loss increased by 12.5 g/L after 16 days of fermentation. For Treatment 5, only microcrystalline cellulose was added at a dosage of 0.045 g/L, and compared with Treatment 6, the cumulative carbon dioxide weight loss increased by 5.97 g/L after 16 days of fermentation. In contrast, for Treatment 1, Fermentation Nutritional Agent 1 was added at a dosage of 0.3 g/L, which contains 0.255 g/L of glutathione-containing inactive yeast FN401GH and 0.045 g/L of microcrystalline cellulose, and compared with Treatment 6, the cumulative carbon dioxide weight loss increased by 21.74 g/L after 16 days of fermentation, which is greater than the sum of the increases in cumulative carbon dioxide weight loss from Treatment 4 and Treatment 5. Therefore, in the present invention, the combination of a glutathione-containing yeast product and cellulose and/or a cellulose derivative has a synergistic effect, which accelerates the release of carbon dioxide and improves the fermentation environment.

### Experimental Example 2

Fermentation tests were carried out to simulate white wine using Triple M simulated juice. The formulation of the Triple M medium was the same as that in Experimental Example 1.

Angel Wine Yeast RV100 (Angel Yeast Co., Ltd.) was inoculated into an Erlenmeyer flask containing Triple M simulated juice at an inoculum size of 0.2 g/L. Immediately after yeast inoculation, nutrients were added, with a group without nutrient addition as a control. Incubation was carried out in an incubator at 24°C, and the fermentation process was monitored by the CO₂ weight loss method (weighing was carried out every 24 h). Fermentation was considered complete when the weight loss of each flask was approximately 0.5 g. The sugar content of the fermentation system was 270 g/L, and the mass content of yeast-assimilable nitrogen in the Triple M simulated juice was 220 ppm.

Treatment 1: The added nutrient was Fermentation Nutritional Agent 1 at a dosage of 0.4 g/L; Treatment 2: The added nutrient was Fermentation Nutritional Agent 2 at a dosage of 0.4 g/L; Treatment 3: The added nutrient was Fermentation Nutritional Agent 3 at a dosage of 0.4 g/L; Treatment 4: The added nutrient was glutathione-containing inactive yeast FN401GH at a dosage of 0.4 g/L;

Treatment 5: No nutrients were added after yeast inoculation.

The results are shown in Table 3:

**Table 3: Results of cumulative carbon dioxide weight loss (g/L)**

| Time d | Treatment 1 | Treatment 2 | Treatment 3 | Treatment 4 | Treatment 5 |
|---|---|---|---|---|---|
| 0 | 0 | 0 | 0 | 0 | 0 |
| 1 | 7.28 | 6.54 | 6.74 | 3.7 | 3.54 |
| 2 | 47.06 | 43.02 | 44.82 | 25.12 | 21.34 |
| 3 | 77.82 | 73.06 | 74.22 | 49.04 | 39.78 |
| 4 | 97.34 | 92.46 | 94.1 | 68.36 | 56.02 |
| 6 | 113.66 | 108.24 | 111.88 | 91.9 | 78.48 |
| 7 | 118.22 | 112.62 | 115.74 | 98.86 | 86.16 |
| 8 | 120.74 | 116.22 | 118.18 | 104.1 | 92.84 |
| 9 | 122.92 | 118.78 | 120.28 | 107.6 | 97.74 |
| 10 | 124.68 | 121.1 | 121.96 | 110.76 | 101.54 |
| 11 | 125.78 | 123.14 | 123.26 | 113.54 | 104.78 |
| 13 | 126.52 | 124.48 | 124.3 | 115.88 | 107.66 |
| 14 | 126.94 | 124.92 | 125.06 | 117.42 | 109.08 |
| 15 | 127.28 | 125.3 | 125.62 | 118.44 | 110.28 |

As can be seen from Table 3, the composition of the present invention has the effects of improving the fermentation environment and promoting fermentation. Compared with using glutathione-containing inactive yeast alone, the composition of the present invention results in a greater weight loss of carbon dioxide in the fermentation process, indicating a better fermentation effect.

### Experimental Example 3

Fermentation tests were carried out to simulate white wine using Triple M simulated juice. The formulation of the Triple M medium was the same as that in Experimental Example 1.

Angel Wine Yeast BV818 (Angel Yeast Co., Ltd.) was inoculated into an Erlenmeyer flask containing Triple M simulated juice at an inoculum size of 0.25 g/L. Immediately after yeast inoculation, nutrients were added, with a group without nutrient addition as a control. Incubation was carried out in an incubator at 24°C, and the fermentation process was monitored by the CO₂ weight loss method (weighing was carried out every 24 h). Fermentation was considered complete when the weight loss of each flask was approximately 0.5 g. The sugar content of the fermentation system was 270 g/L, and the mass content of yeast-assimilable nitrogen in the Triple M simulated juice was 220 ppm.
Treatment 1: The added nutrient was Fermentation Nutritional Agent 4 at a dosage of 0.4 g/L;
Treatment 2: The added nutrient was Fermentation Nutritional Agent 5 at a dosage of 0.4 g/L;
Treatment 3: The added nutrient was Fermentation Nutritional Agent 6 at a dosage of 0.4 g/L;
Treatment 4: The added nutrient was Fermentation Nutritional Agent 7 at a dosage of 0.4 g/L;
Treatment 5: The added nutrient was Fermentation Nutritional Agent 8 at a dosage of 0.4 g/L;
Treatment 6: No nutrients were added after yeast inoculation.

The results are shown in Table 4:

**Table 4: Results of cumulative carbon dioxide weight loss (g/L)**

| Time, d | Treatment 1 | Treatment 2 | Treatment 3 | Treatment 4 | Treatment 5 | Treatment 6 |
|---|---|---|---|---|---|---|
| 0 | 0 | 0 | 0 | 0 | 0 | 0 |
| 1 | 4.95 | 4.56 | 4.86 | 4.35 | 4.05 | 3.82 |
| 2 | 32.39 | 28.1 | 29.76 | 27.06 | 25.41 | 24.3 |
| 3 | 60.83 | 49 | 51.85 | 47.59 | 44.79 | 43.12 |
| 4 | 79.49 | 64.81 | 67.67 | 62.98 | 59.29 | 57.1 |
| 5 | 94.45 | 78.61 | 81.68 | 76.15 | 71.72 | 69.14 |
| 6 | 103.7 | 88.62 | 91.39 | 87.71 | 82.7 | 79.75 |
| 7 | 109.89 | 96.32 | 99.89 | 96.75 | 91.29 | 88.06 |
| 8 | 113.6 | 101.24 | 103.81 | 103.28 | 97.5 | 94.1 |
| 10 | 118.72 | 107.66 | 109.78 | 110.79 | 104.75 | 101.12 |
| 11 | 120.25 | 109.29 | 111.56 | 114.02 | 107.81 | 104.01 |
| 12 | 121.97 | 111.21 | 113.71 | 115.76 | 109.39 | 105.38 |
| 13 | 123.09 | 112.21 | 115.08 | 117.37 | 110.86 | 106.76 |
| 14 | 124.18 | 113.35 | 116.63 | 118.82 | 112.23 | 108.08 |
| 15 | 125.07 | 114.29 | 118.03 | 120.09 | 113.46 | 109.24 |
| 16 | 125.82 | 114.98 | 119 | 120.98 | 114.33 | 110.09 |

As can be seen from Table 4, compared with Treatment 2, the fermentation nutritional agent in Treatment 3 included vitamins, resulting in a greater weight loss of carbon dioxide in the fermentation process than that in Treatment 2, indicating a better fermentation effect. Although the concentration of vitamins in grape juice can usually meet the growth needs of yeast, vitamins may be preferentially absorbed by other harmful microorganisms, which in turn affects the metabolic growth of wine yeast. This consumption of vitamins leads to slow or sluggish fermentation. Therefore, the addition of vitamins can have a positive effect. Compared with Treatment 3, the fermentation nutritional agent in Treatment 1 included metal ions, resulting in a greater weight loss of carbon dioxide in the fermentation process than that in Treatment 3, indicating a better fermentation effect.

### Experimental Example 4

This experimental example focuses on the protective effect on the color of crystal white grape juice. Free-run juice and pressed juice were separately collected from the crystal grape juice. The free-run juice and pressed juice differ in their polyphenol content. Polyphenols are prone to oxidative browning and are mainly present in grape skins. Free-run juice is the grape juice that flows out automatically after grapes are crushed, while pressed juice is the grape juice obtained through pressing. The polyphenol content in free-run juice is lower than that in pressed juice.

Fresh crystal grapes were destemmed and crushed. 60 ppm of sulfur dioxide and 40 ppm of pectinase were added, and then free-run grape juice and pressed grape juice were separated. The free-run grape juice and pressed grape juice were clarified for 2 days for later use. Nutrients were added to the grape juices, with the grape juices without nutrient addition as the blank control. After being placed at refrigeration temperature for 2-3 days, the chromaticity of the grape juices was tested.

Determination of grape juice chromaticity: Grape juice was sampled using a centrifuge tube and centrifuged in a refrigerated centrifuge at a speed of 10,000 rpm for 5 min. After centrifugation, the absorbance at 420 nm was determined using a 1 cm cuvette. The magnitude of the absorbance indicates the degree of oxidation.
Treatment 1: The added nutrient was Fermentation Nutritional Agent 1 at a dosage of 0.3 g/L based on the volume of grape juice;
Treatment 2: The added nutrient was Fermentation Nutritional Agent 4 at a dosage of 0.3 g/L based on the volume of grape juice;
Treatment 3: The added nutrient was Fermentation Nutritional Agent 5 at a dosage of 0.3 g/L based on the volume of grape juice;
Treatment 4: The added nutrient was Fermentation Nutritional Agent 6 at a dosage of 0.3 g/L based on the volume of grape juice;
Treatment 5: The added nutrient was glutathione-containing inactive yeast FN401GH at a dosage of 0.3 g/L;
Treatment 6: The added nutrient was microcrystalline cellulose at a dosage of 0.3 g/L;
Treatment 7 (control group): No nutrients were added.

The results are shown in Table 5:

**Table 5: Browning degree of grape juice**

| No. | Glutathione content in added nutrients (mg/L) | Browning degree of free-run grape juice | Browning degree of pressed grape juice |
|---|---|---|---|
| Treatment 1 | 12.15 | 0.273 | 0.713 |
| Treatment 2 | 19 | 0.191 | 0.557 |
| Treatment 3 | 20.11 | 0.172 | 0.534 |
| Treatment 4 | 20.11 | 0.181 | 0.516 |
| Treatment 5 | 13.5 | 0.261 | 0.626 |
| Treatment 6 | 0 | 0.47 | 0.813 |
| Treatment 7 | 0 | 0.464 | 0.823 |

Oxidation is a well-known issue in the grape wine industry, whether for white wine or red wine, especially in young wines. Grape wine is sensitive to oxygen, which can lead to the loss of characteristic aroma, atypical aging, and undesirable color changes. Although the mechanisms involved in grape wine oxidation have been extensively studied, the inhibition of oxidative deterioration of grape wine remains a primary goal in modern grape winemaking.

The oxidation of young wines is associated with the rapid loss of grape wine's sensory characteristics, especially affecting floral and fruity aromas, as well as the formation of unpleasant new aromas and atypical odors related to grape wine spoilage. Oxidation in grape wine leads to browning, where phenols are oxidized to quinones, which then polymerize to form macromolecules with a yellow-brown hue. GSH plays an indispensable role in the oxidation of white grape must, reacting with o-quinones to generate 2-(S)-glutathionylcaffeic acid, also known as grape reaction product (GRP). This product can inhibit further oxidation mediated by grape polyphenol oxidase. In this way, GSH traps o-quinones to form a colorless compound, preventing the formation of brown polymers to a certain extent. Therefore, GSH can prevent the browning of white grape must.

Pressed grape juice contains more polyphenol components and is therefore more prone to oxidation. The more antioxidant components contained in yeast products, the better the antioxidant capacity of the grape juice, resulting in a lighter color of the grape juice and a lower determined absorbance. For white wine or white grape juice, the determination of OD420 can indicate the browning of the grape wine. The lower the absorbance of the grape juice determined at 420 nm, the lower the degree of color browning. Glutathione can bind to brown pigment substances in grape juice to form colorless compounds.

As can be seen from Table 5, Treatment 6 with microcrystalline cellulose added and Treatment 7 with no nutrients added exhibited a relatively high browning degree of grape juice. Compared with Treatments 6 and 7, the addition of the fermentation nutritional agent of the present invention could significantly reduce the browning of grape juice and exhibited the effect of protecting the color of grape wine.

### Experimental Example 5

This experimental example was carried out using crystal grape wine after fermentation. The grape wine had an alcohol content of 12.4% v/v, a reducing sugar content of 3.43 g/L, a pH of 3.56, and a total acid content of 6.7 g/L. 500 mL of the grape wine was taken, to which nutrients were added, with the grape wine without nutrient addition as the blank control. After being placed at a temperature of 10-15°C for 6 months, the aroma components of the grape wine were tested using an Agilent 7890B-5977A GC-MS gas chromatography-mass spectrometer by the headspace solid-phase microextraction method, and quantitative analysis of the aroma substances in grapes and grape wine was carried out using the full-scan mass spectrometry (Scan) spectra, the chromatographic retention times and mass spectral information of existing standard samples, the comparison results from NIST17 standard spectral library, and reference to relevant literature.

Here, the headspace solid-phase microextraction method was as follows:
5 ml of the grape wine sample, 1.3 g of NaCl, and 5 µl of the 2 g/l internal standard 4-methyl-2-pentanol were added to a 15 ml sample vial. The sample vial was immediately sealed tightly with a sample vial cap with a polytetrafluoroethylene septum, then placed on a solid-phase extraction platform, incubated at 50°C, and stirred and preheated for 30 min at a stirring speed of 400 rpm (10 s on, 2 s off). After the gas-liquid phase aroma substances in the sample vial reached equilibrium, the activated or thermally desorbed extraction fiber was inserted into the headspace of the sample vial, 1 cm above the liquid surface, to avoid contact with the solution. Adsorption was carried out for 30 min under stirring and heating at 50°C. Thermal desorption was carried out in the gas chromatography inlet at 250°C for 25 min. The capillary column used was HP-INNOWAX

30 m × 0.25 mm × 0.25 µm. The carrier gas was high-purity helium, with a flow rate of 1 ml/min; a splitless mode was adopted. The extraction fiber was inserted into the gas chromatography inlet. Thermal desorption was carried out in the inlet at 250°C for 25 min.

The temperature program was as follows: initial temperature 40°C, held for 5 min, increased to 60°C at 2°C/min, increased to 150°C at 5°C/min, increased to 210°C at 3°C/min, increased to 250°C at 10°C/min, and held for 2 min.

The mass spectrometry interface temperature was 280°C, the ion source temperature was 230°C, the ionization mode was EI, the ion energy was 70 eV, and the mass scanning range was 29-350 u.
Treatment 1: The added nutrient was Fermentation Nutritional Agent 1 at a dosage of 0.3 g/L;
Treatment 2: The added nutrient was Fermentation Nutritional Agent 5 at a dosage of 0.3 g/L;
Treatment 3: No nutrients were added.

The results are shown in Table 6:

**Table 6: Terpenoid aroma substances in grape wine (ug/L)**

| | Treatment 1 | Treatment 2 | Treatment 3 |
|---|---|---|---|
| Linalool | 70.02 | 74.37 | 56.49 |
| Nerolidol | 29.47 | 33.76 | 25.02 |
| Nerol | 8.94 | 9.34 | 6.59 |
| Terpineol | 20.25 | 21.09 | 18.07 |

As can be seen from Table 6, compared with no nutrients added, after adding Fermentation Nutritional Agent 1 and Fermentation Nutritional Agent 5 of the present invention, the contents of linalool, nerolidol, nerol, and terpineol all increased. Among the aroma substances in grape wine, terpenoids are a type of varietal aroma in grape wine, especially in rose-scented grape wines. Crystal grape is a type of rose-scented grape and contains a large amount of terpenoid aroma substances. The oxidation of terpenoids leads to a decrease in aroma intensity. Since glutathione has an antioxidant effect, the addition of the fermentation nutritional agents of the present invention can prevent the oxidation of terpenoids such as linalool, nerolidol, nerol, and terpineol in grape wine, thereby protecting the aroma of grape wine.

The above description is merely an illustration of the technical spirit of the present invention. Those skilled in the art will understand that various modifications and changes may be made to the present invention without departing from the spirit and scope of the present invention. Therefore, the above embodiments of the present invention may be implemented individually or in combination with one another.

Finally, it is noted that the above embodiments are only intended to illustrate rather than limit the technical solutions of the present invention. Although the present invention has been described in detail by the above embodiments, it will be understood by those skilled in the art that various changes may be made in form and details without departing from the scope of the claims of the present invention.

## Claims

1. A grape wine or fruit wine fermentation nutritional agent, **characterized in that** the fermentation nutritional agent comprises the following components in percentage by weight: 85-99% of a glutathione-containing yeast product, and 1-15% of cellulose and/or a cellulose derivative.

2. The fermentation nutritional agent according to claim 1, wherein the content of the glutathione-containing yeast product is 85-95%, and the content of the cellulose and/or a cellulose derivative is 5-15%; preferably, the content of the glutathione-containing yeast product is 85-90%, and the content of the cellulose and/or a cellulose derivative is 10-15%.

3. The fermentation nutritional agent according to claim 1 or 2, wherein the grape wine or fruit wine fermentation nutritional agent further comprises optional components, and the optional components comprise, based on the percentage by weight of the fermentation nutritional agent, 0-2% of B vitamins and/or 0-7% of minerals; preferably, the optional components comprise 0.01-2% of B vitamins and 1-7% of minerals.

4. The fermentation nutritional agent according to any one of claims 1-3, wherein the glutathione-containing yeast product is selected from the group consisting of one or two or more of glutathione-containing inactive yeast, glutathione-containing autolyzed yeast, and glutathione-containing yeast extract; preferably, the glutathione-containing yeast product is glutathione-containing inactive yeast; preferably, the content of glutathione in the glutathione-containing yeast product is 2-15 wt%.

5. The fermentation nutritional agent according to any one of claims 1-4, wherein the cellulose and/or a cellulose derivative comprises one or two or more of microcrystalline cellulose, sodium carboxymethyl cellulose, and hydroxypropyl methyl cellulose, preferably the cellulose and/or a cellulose derivative is microcrystalline cellulose.

6. The fermentation nutritional agent according to any one of claims 3-5, wherein the B vitamins comprise one or two or more of vitamin B1, vitamin B2, vitamin B3, vitamin B5, vitamin B6, inositol, and biotin;
preferably, the B vitamins comprise, based on the percentage by weight of the fermentation nutritional agent, 0-0.12 wt% of vitamin B1, 0-0.4 wt% of vitamin B2, 0-0.4 wt% of vitamin B3, 0-0.4 wt% of vitamin B5, 0-0.4 wt% of vitamin B6, 0-0.5 wt% of inositol, and 0-0.5 wt% of biotin; preferably, the B vitamins comprise 0.1-0.12 wt% of vitamin B1, 0.16-0.4 wt% of vitamin B2, 0.36-0.4 wt% of vitamin B3, 0.24-0.4 wt% of vitamin B5, 0.12-0.4 wt% of vitamin B6, and 0-0.3 wt% of biotin.

7. The fermentation nutritional agent according to any one of claims 3-6, wherein the minerals are selected from the group consisting of one or two or more of salts containing magnesium, manganese, and zinc;
preferably, the minerals are selected from the group consisting of one or two or more of magnesium sulfate, manganese sulfate, and zinc sulfate.

8. Use of the fermentation nutritional agent according to any one of claims 1-7 in the preparation process of grape wine or fruit wine; preferably, the dosage of the fermentation nutritional agent in grape wine or fruit wine fermentation is, based on the volume of grape juice or fruit juice, 0.2-0.5 g/L.

9. The use according to claim 8, wherein the use of the fermentation nutritional agent is for improving the fermentation performance and/or aroma and/or color of grape wine or fruit wine; preferably, the use of the fermentation nutritional agent is for improving the aroma and color of grape wine.

10. A method for protecting the aroma and/or color of grape wine or fruit wine using the fermentation nutritional agent according to any one of claims 1-7, **characterized in that**, the method comprises pre-introducing the fermentation nutritional agent into grape juice or fruit juice before the start of the alcoholic fermentation step in the early stage of fermentation, during fermentation, or after fermentation.

11. A grape wine or fruit wine prepared using the fermentation nutritional agent according to any one of claims 1-7.

12. Use of a glutathione-containing yeast product combined with cellulose and/or a cellulose derivative for improving the fermentation performance and/or aroma and/or color of grape wine or fruit wine.
